# EUROPÄISCHE PATENTSCHRIFT

(11) **EP 0 396 990 B1**
(45) Veröffentlichungstag und Bekanntmachung des Hinweises auf die Patenterteilung: **17.11.1994**
(21) Anmeldenummer: 90108154.7
(22) Anmeldetag: 28.04.1990
(51) Int. Cl.: B65D 83/06, G01F 11/18

(54) **Dosierspender für Pulver, insbesondere für Süssstoffpulver**
Dosing dispenser for powder, particularly for saccharin powder
Distributeur doseur pour poudre, en particulier pour poudre de saccharine

(30) Priorität: 11.05.1989 DE 3915423
(43) Veröffentlichungstag der Anmeldung: 14.11.1990
(73) Patentinhaber: BAYER AG, 51368 Leverkusen (DE)
(72) Erfinder: Kanthak, Franz, Dipl.-Ing., D-4018 Langenfeld (DE); Kutscher, Hans, D-5090 Leverkusen 1 (DE)

(56) Entgegenhaltungen:
- EP-A- 0 270 010
- US-A- 4 394 941

## Beschreibung

Die Erfindung betrifft einen Dosierspender für Pulver, insbesondere für Süßstoffpulver, bestehend aus einem Gehäuse mit Vorratskammer, deren Boden eine Auslaßöffnung aufweist, welche in eine Führung für einen Schieber mit Druckplatte und mit Rückstellfeder mündet, wobei der Schieber einen in seiner Ruhestellung unterhalb der Auslaßöffnung befindlichen Kanal aufweist, dessen Auswurföffnung in Ruhestellung durch eine Abdeckung abgedeckt ist.

Dosierspender dieser Art sind für Tabletten, Dragees und dergleichen als Taschen- und Tischdosen bekannt (DE-C2-25 38 904).

Es ist beispielsweise sehr kostenaufwendig Süßstoffpulver zu Tabletten zu pressen, wobei sich dann diese Tabletten wieder im Getränk auflösen müssen. Nachteilig ist auch, daß der Auflösevorgang der Tabletten eine gewisse Zeit in Anspruch nimmt. Es ist weiterhin bekannt, Süßstoff in Pulverform zu verwenden und es gibt Dosierspender für solche Pulver, die es erlauben, in der Tasche mitgeführt zu werden oder als Tischdose dienen können, z.B. EP-A-270010, das dem Gegenstand des Oberbegriffs des Anspruchs entspricht.

Es besteht die Aufgabe, einen Dosierspender für Pulver, insbesondere für Süßstoffpulver, zu schaffen, um den Umweg über die Tablettenform zu vermeiden, eine exakte Dosierung zu gewährleisten und zudem den Vorteil auszunutzen, daß sich Pulver in Flüssigkeiten schneller löst als Tabletten.

Gelöst wird diese Aufgabe dadurch, daß beim Übergang des Schiebers von der Ruhestellung (Füllstellung) in die Auswurfstellung der Kanal für einen Moment weder mit der Auslaßöffnung des Bodens, noch mit dem freien Raum Verbindung besitzt.

Durch diese Maßnahme wird sichergestellt, daß das Pulver aus der Vorratskammer nur in einer dem Volumen des Kanals entsprechenden, dosierten Menge pro Schieberhub ausgeworfen wird. Ist der Kanal beispielsweise senkrecht zur Bodenfläche des Dosierspenders angeordnet, so muß sich die Abdeckung zumindest um die Breite des Kanals, beginnend mit der Projektion der der Auswurfstelle nächstgelegenen Kante der Auslaßöffnung des Bodens, in Richtung Auswurfstelle erstrecken. Ist der Kanal geneigt angeordnet, so ist die Neigung entsprechend zu berücksichtigen.

Bei dem vorbekannten Dosierspender für Tabletten überschneidet sich die Auslaßöffnung des Bodens der Vorratskammer in der Projektion mit dem freien Raum an der Auswurfstelle. Es ist selbstverständlich, daß zwischen Führung und Schieber eine ausreichend enge Passung vorhanden sein muß, damit möglichst wenig Pulver zwischen die Gleitflächen dringt.

Eine bevorzugte Ausführungsform des Dosierspenders besteht darin, daß die Führung einen kreisförmigen Querschnitt aufweist und der Querschnitt des Schiebers diesen Querschnitt mindestens in dem zur Auslaßöffnung des Bodens weisenden Bereich angepaßt ist.

Diese Gestaltung eignet sich besonders für die Herstellung des Gehäuses und des Schiebers aus Kunststoff durch Spritzgießen. Sie vermeidet einerseits Verstopfungen und dichtet andererseits gegen das Pulver gut ab.

Gemäß einer weiteren besonderen Ausführungsform sind Führung und Schieber zur Auswurfstellung hin geneigt.

Diese Ausgestaltung ist besonders günstig, weil eventuell doch zwischen Schieber und Führung eindringende Pulverpartikelchen bei der Schieberbewegung aufgrund dieser Neigung immer einen größeren Vorschub in Auswurfrichtung erfahren, um letztendlich mit ausgestoßen zu werden, so daß kein Blockieren des Schiebers in der Führung eintreten kann.

Der neue Dosierspender ist in der Zeichnung rein schematisch im Schnitt dargestellt und nachstehend näher erläutert. Es zeigen:
- Fig. 1: den Dosierspender mit dem Schieber in Ruhestellung und
- Fig. 2: den Dosierspender mit dem Schieber in Auswurfstellung.

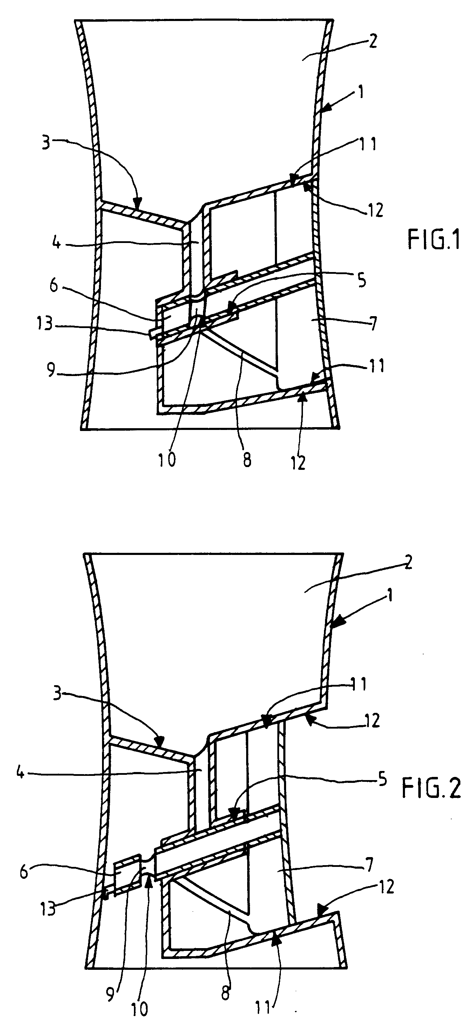

In Fig. 1, 2 besteht die mit einem nicht dargestellten Deckel versehene Spenderdose aus einem Gehäuse 1 mit Vorratskammer 2, deren Boden 3 eine Auslaßöffnung 4 aufweist, welche in eine Führung 5 für einen Schieber 6 mit Druckplatte 7 und Rückstellfeder 8 öffnet. Der Boden 3 ist allseitig zur Auswurfstelle hin geneigt. Die Führung 5 besitzt einen kreisförmigen Querschnitt. Der Querschnitt des Schiebers 6 ist in seinem oberen Bereich der Querschnittsform der Führung 5 angepaßt, so daß in diesem Bereich eine gewisse Dichtwirkung gegen Eindringen von Pulver besteht. Der Schieber 6 ist von einem Kanal 9 durchquert, welcher in Ruhestellung des Schiebers 6 mit der Auslaßöffnung 4 fluchtet. Das Volumen dieses Kanals 9 entspricht der mit einem Auswurf dosierbaren Menge an Pulver. Unterhalb der Auslaßöffnung 4 dient die Führung 5 als dichtende Abdeckung für die Auswurföffnung 10 des Kanals 9 und reicht in Richtung der Auswurfstellung so weit, daß der Kanal 9 in keiner Stellung die Vorratskammer 2 mit dem freien Raum verbindet. Die Druckplatte 7 weist ebenfalls Führungsflächen 11 auf, welche mit Führungsflächen 12 des Gehäuses 1 korrespondieren und gleichzeitig ein Verdrehen des Schiebers ausschließen. Die Druckplatte 7 ist auch noch seitlich geführt, was jedoch aus der Zeichnung schlecht ersichtlich ist. Ein am Schieber 6 angebrachter Sicherungshaken 13 sorgt dafür, daß der Schieber 6 nicht herausfallen kann.

Sowohl Gehäuse 1 als auch Schieber 6 sind im Spritzgießverfahren aus Kunststoff hergestellt.

## Patentansprüche

1. Dosierspender für Pulver, insbesondere für Süßstoffpulver, bestehend aus einem Gehäuse (1) mit Vorratskammer (2), deren Boden (3) eine Auslaßöffnung (4) aufweist, welche in eine Führung (5) für einen Schieber (6) mit Druckplatte (7) und mit Rückstellfeder (8) mündet, wobei der Schieber (6) einen in seiner Ruhestellung unterhalb der Auslaßöffnung (4) senkrecht zur Bodenfläche des Spenders angeordneten Kanal (9) aufweist, dessen Auswurföffnung (10) in Ruhestellung durch die Führung (5) abgedeckt ist, wobei der als Abdeckung dienende Teil der Führung (5) sich in Richtung Auswurfstellung des Schiebers (6) mindestens um die Breite des Kanals (9), beginnend mit der Projektion der der Auswurfstelle nächstliegenden Kante des Kanals, erstreckt, so daß beim Übergang des Schiebers von der Ruhestellung (Füllstellung) in die Auswurfstellung der Kanal (9) für einen Moment weder mit der Auslaßöffnung (4) des Bodens (3) noch mit dem freien Raum Verbindung besitzt, dadurch gekennzeichnet, daß die Führung (5) kreisförmigen Querschnitt aufweist und der Querschnitt des Schiebers (6) diesem Querschnitt mindestens in dem zur Auslaßöffnung (4) des Bodens (3) weisenden Bereich angepaßt ist und daß Führung (5) und Schieber (6) zur Auswurfstellung hin geneigt sind.

## Claims

1. Metering dispenser for powder, in particular for sweetening agent powder, comprising a housing (1) having a store chamber (2), the base (3) of which exhibits an outlet opening (4) which emerges in a guide (5) for a slide (6) having a pressure plate (7) and having a restoring spring (8), the slide (6) exhibiting a channel (9), which, in the rest position of the said slide, is disposed below the outlet opening (4) perpendicular to the base surface of the dispenser and the discharge opening (10) of which channel is covered, in the rest position, by the guide (5), that part of the guide (5) which serves as a cover extending in the direction of the discharge position of the slide (6) by at least the width of the channel (9), starting with the projection of that edge of the channel lying closest to the discharge point, so that, when the slide passes from the rest position (filling position) into the discharge position, the channel (9) is momentarily connected neither to the outlet opening (4) of the base (3) nor to the free space, characterized in that the guide (5) exhibits a circular cross-section and the cross-section of the slide (6) is matched to this cross-section, at least in the region pointing towards the outlet opening (4) of the base (3), and in that the guide (5) and the slide (6) are inclined towards the discharge position.

## Revendications

1. Doseur de poudre, en particulier de poudre de saccharine, comportant un boîtier (1) pourvu d'un réservoir (2) dont le fond (3) présente une lumière de sortie (4) qui donne dans un canal (5) destiné à un tiroir coulissant (6) pourvu d'une plaque d'éjection (7) et d'un ressort de rappel (8), le tiroir coulissant (6) présentant un canal (9) qui dans sa position neutre au bas de la lumière de sortie (4), est disposé verticalement par rapport à la base du doseur et dont la lumière d'éjection (10) est obturée en position neutre par le conduit (5), la partie du conduit (5) tenant lieu de couvercle s'étendant en direction de la position d'éjection du tiroir coulissant (6) au moins sur la largeur du canal (9), laquelle débute à la hauteur de la projection du côté du canal le plus proche du lieu d'éjection de sorte que lors du passage du tiroir coulissant de sa position neutre (position de remplissage) à sa position d'éjection, le canal (9) ne soit relié pendant un moment ni avec la lumière de sortie (4) aménagée dans le fond (3) du réservoir, ni avec l'espace libre, caractérisé en ce que le conduit (5) présente une section circulaire, que la section du tiroir coulissant (6) y est adaptée au moins dans sa partie dirigée vers la lumière de sortie (4) du fond (3) et que le conduit (5) et le tiroir coulissant (6) sont inclinés en direction de la position d'éjection.
